# EUROPÄISCHE PATENTSCHRIFT

(11) **EP 3 322 654 B1**
(45) Veröffentlichungstag und Bekanntmachung des Hinweises auf die Patenterteilung: **11.12.2019**
(21) Anmeldenummer: 16738703.4
(22) Anmeldetag: 04.07.2016
(51) Int. Cl.: B65G 21/00, B65G 43/00, B65G 21/06

(54) **FÖRDERVORRICHTUNG ZUM TRANSPORT VON EINZELNEN PRODUKTEN**
CONVEYOR DEVICE FOR TRANSPORTING INDIVIDUAL PRODUCTS
DISPOSITIF DE CONVOYAGE POUR LE TRANSPORT DE PRODUITS INDIVIDUELS

(30) Priorität: 24.09.2015 DE 102015116167
(43) Veröffentlichungstag der Anmeldung: 23.05.2018
(73) Patentinhaber: Espera-Werke GmbH, 47058 Duisburg (DE)
(72) Erfinder: VICKTORIUS, Winfried, 47249 Duisburg (DE); WIEGEL, Mario, 45136 Essen (DE)
(74) Vertreter: Gottschald Patentanwälte Partnerschaft mbB
(86) Internationale Anmeldenummer: PCT/EP2016/065629
(87) Internationale Veröffentlichungsnummer: WO 2017/050450

(56) Entgegenhaltungen:
- JP-A- H04 121 308
- JP-A- H04 121 309
- JP-A- 2011 001 730
- US-A- 5 141 381
- US-A- 5 490 590

## Beschreibung

Die vorliegende Erfindung betrifft eine Fördervorrichtung zum Transport von einzelnen Produkten, mit einer Vorschubeinrichtung umfassend ein Transportmittel zum Transport des jeweiligen Produkts in einer Transportrichtung, die zur Schwerkraftrichtung winkelig, insbesondere orthogonal, verläuft, wobei das Transportmittel eine Auflagefläche für das jeweilige Produkt aufweist, mit einer Steuereinrichtung umfassend mindestens ein elektronisches Bauteil und mit einem Gestell, das einen zwischen einer Betriebsposition und einer Wartungsposition bewegbaren Halter trägt, der das mindestens eine elektronische Bauteil trägt, wobei das mindestens eine elektronische Bauteil in der Betriebsposition des Halters betriebsbereit ist. Die Erfindung betrifft auch eine Etikettiervorrichtung mit einer solchen Fördervorrichtung und einer Aufbringvorrichtung zum Aufbringen eines Etiketts auf das jeweilige Produkt.

Fördervorrichtungen der zuvor definierten Art sind beispielsweise Bestandteil von Etikettiervorrichtungen, bei denen einzelne Produkte bzw. Packungen über ein Förderband transportiert und während des Transports mit einem bedruckten Etikett versehen werden. Zur Steuerung einer solchen Fördervorrichtung, insbesondere zur Steuerung der Geschwindigkeit und Taktung, verfügt die Fördervorrichtung über eine Steuereinrichtung mit einem oder mehreren elektronischen Bauteilen. Unter einem elektronischen Bauteil wird im Sinne der vorliegenden Erfindung nicht nur eine elektronische Komponente wie ein Widerstand oder Kondensator oder dergleichen verstanden, sondern auch eine aus mehreren Komponenten bestehende Baugruppe (Elektronik-Baugruppe). Eine Steuereinrichtung kann mehrere solcher Elektronik-Baugruppen aufweisen.

Ein Beispiel für eine solche Fördervorrichtung nach dem Oberbegriff des Anspruchs 1 offenbart die JP H04-121309 A. Bei der bekannten Fördervorrichtung befindet sich mindestens ein elektronisches Bauteil innerhalb eines Gehäuses, welches von dem Gestell der Fördervorrichtung getragen wird. Das Gehäuse ist vertikal unterhalb, das heißt in Schwerkraftrichtung unterhalb, des Förderbands angeordnet. Über eine nach unten schwenkbare seitliche Klappe im Gehäuse sind die Elektronik-Baugruppen darin, insbesondere die an der Klappe angeordnete Kontrolleinheit und Einstelleinheit, für Einstell- und Wartungsarbeiten und zur Inspektion zugänglich.

Problematisch bei diesem Stand der Technik ist allerdings, dass das Gehäuse mit den darin befindlichen elektronischen Bauteilen relativ klein und aufgrund seiner Größe und Lage die darin befindlichen Bauteile relativ schwer zugänglich sind.

Bei einem solchen Stand der Technik wird die Fördervorrichtung aus Sicherheitsgründen, insbesondere um Beschädigungen der elektronischen Bauteile zu vermeiden, für Einstell- und Wartungsarbeiten außer Betrieb genommen. Sind die elektronischen Bauteile wie bei dem zuvor beschriebenen Stand der Technik auf relativ engem Raum angeordnet, ist seitens des Wartungspersonals erhöhte Vorsicht geboten, wodurch sich auch der Zeitaufwand für die Wartungsarbeiten erhöht.

Es ist daher eine Aufgabe der vorliegenden Erfindung, eine Fördervorrichtung zu schaffen, bei der Einstell- und Wartungsarbeiten vereinfacht und dadurch Stillstandzeiten der Fördervorrichtung verringert werden.

Die zuvor hergeleitete und aufgezeigte Aufgabe wird mit einer Fördervorrichtung: nach dem Anspruch 1 gelöst.

Kern der vorliegenden Erfindung ist also, dass das Gestell mit dem bewegbaren Halter derart ausgebildet ist, dass das mindestens eine elektronische Bauteil und insbesondere alle elektronischen Bauteile der Steuereinrichtung auch in der Wartungsposition betriebsbereit ist/sind. "Betriebsbereit" bedeutet im Sinne der Erfindung, dass das jeweilige elektronische Bauteil bzw. die Steuereinrichtung voll funktionsfähig ist, das heißt alle für die Steuerung vorgesehenen Funktionen ausführen kann. Erfindungsgemäß ist der bewegbare Halter also so angeordnet und gelagert, dass zum Verlagern in die Wartungsposition keine stromführenden Leitungen oder Kontakte und keine Datenleitungen oder Datenschnittstellen getrennt werden bzw. in der Wartungsposition getrennt sind. Wie im Weiteren noch erläutert wird, wird der bewegbare Halter insbesondere in eine Wartungsposition verlagert, in der eine Bedienperson das mindestens eine elektronische Bauteil besonders einfach erreichen kann, insbesondere ohne sich bücken oder hinknien zu müssen. Die Fördervorrichtung kann auf diese Weise besonders einfach gewartet und eingestellt werden. Da auch in der Wartungsposition die Steuereinrichtung betriebsbereit ist, entfallen bei den Einstell- und Wartungsarbeiten auch Stillstandzeiten, da die Fördervorrichtung ohne nennenswerte Einschränkungen weiterbetrieben werden kann.

Es sei darauf hingewiesen, dass wenn von mindestens einem elektronischen Bauteil, das mit dem bewegbaren Halter verbunden ist, die Rede ist, auch mehrere elektronische Bauteile gemeint sein können, die mit dem bewegbaren Halter verbunden sind. Insbesondere handelt es sich bei dem oder den elektronischen Bauteilen, die mit dem Halter verbunden sind, um solche Bauteile, die Einstellmöglichkeiten bieten (Stell- und/oder Regelelemente). Zusätzlich oder alternativ kann es sich dabei um Bauteile handeln, mit denen Messungen vorgenommen (Messelemente) oder von denen Daten ausgelesen oder abgelesen werden können (Ausleseelement bzw. Anzeigeelement).

Gemäß einer Ausgestaltung der erfindungsgemäßen Fördervorrichtung liegt der Schwerpunkt des mindestens einen elektronischen Bauteils in der Betriebsposition in einer ersten zur Schwerkraftrichtung orthogonalen (horizontalen) Ebene und in der Wartungsposition in einer zweiten zur Schwerkraftrichtung orthogonalen (horizontalen) Ebene, die von der ersten Ebene entgegen der Schwerkraftrichtung (vertikal) beabstandet ist. Alternativ oder zusätzlich liegt der Mittelpunkt der vom Halter wegweisenden Oberfläche des mindestens einen elektronischen Bauteils in der Betriebsposition in einer ersten zur Schwerkraftrichtung orthogonalen (horizontalen) Ebene und in der Wartungsposition in einer zweiten zur Schwerkraftrichtung orthogonalen (horizontalen) Ebene, die von der ersten Ebene entgegen der Schwerkraftrichtung (vertikal) beabstandet ist. Mit anderen Worten ist der Schwerpunkt und/oder der Mittelpunkt der vom Halter wegweisenden Oberfläche in der jeweiligen zweiten horizontalen Ebene, also in der Wartungsposition, höher bzw. vertikal weiter vom Boden beabstandet als in der jeweiligen ersten horizontalen Ebene, also Betriebsposition. Dadurch wird ermöglicht, das oder die elektronischen Bauteile, die mit dem bewegbaren Halter verbunden sind, während des regulären Betriebs der Fördervorrichtung, das heißt in der Betriebsposition, in einer geschützten Position anzuordnen, in der die Bauteile nicht unabsichtlich berührt und beschädigt werden können. Durch das Bewegen des Halters in die Wartungsposition kann dieses Bauteil oder können diese Bauteile in eine weniger geschützte, erhöhte Position gebracht werden, in der die Bauteile aber besonders einfach zugänglich sind.

Gemäß noch einer Ausgestaltung der erfindungsgemäßen Fördervorrichtung liegt der Halter und/oder das mindestens eine elektronische Bauteil, insbesondere der Schwerpunkt und/oder die vom Halter wegweisende Oberfläche des Bauteils, in der Betriebsposition größtenteils, insbesondere vollständig, innerhalb der äußeren Begrenzung des Gestells und/oder in der Wartungsposition größtenteils, insbesondere vollständig, außerhalb der äußeren Begrenzung des Gestells. Auf diese Weise ist mit einfachen Mitteln gewährleistet, dass die empfindlichen elektronischen Bauteile in der Betriebsposition besonders gut geschützt und in der Wartungsposition besonders gut erreichbar sind.

Gemäß noch einer Ausgestaltung liegt das mindestens eine elektronische Bauteil in der Wartungsposition größtenteils, insbesondere vollständig, vertikal oberhalb einer zur Schwerkraftrichtung orthogonalen Ebene, in der die (im Betrieb dem Produkt zugekehrte) Auflagefläche (Oberseite) des Transportmittels der Vorschubeinrichtung verläuft. Auf diese Weise kann eine Bedienperson, die vor dem Transportmittel der Vorschubeinrichtung steht, über das Transportmittel hinweg auf einfache Weise das oder die elektronischen Bauteile erreichen, die mit dem in der Wartungsposition befindlichen Halter verbunden sind. Das mindestens eine elektronische Bauteil ist dadurch wesentlich einfacher zu erreichen, als wenn dieses in dem Bereich vertikal unterhalb des Transportmittels angeordnet wäre. Auch muss die Bedienperson nicht auf die Rückseite der Fördervorrichtung gelangen, um besagtes mindestens eine elektronische Bauteil zu erreichen. Da die Fördervorrichtung von der Rückseite her nicht zugänglich sein muss, kann diese besonders platzsparend in einem Raum, beispielsweise mit der Rückseite bündig an einer Wand, aufgestellt werden. Dennoch sind jederzeit die maßgeblichen Bauteile der Steuereinrichtung durch den besonderen bewegbaren Halter auf einfache Weise zugänglich.

Gemäß noch einer Ausgestaltung der erfindungsgemäßen Fördervorrichtung liegt der Halter und/oder das mindestens eine elektronische Bauteil in der Wartungsposition außerhalb der entgegen der Schwerkraftrichtung weisenden (vertikalen) Projektion der Auflagefläche des Transportmittels der Vorschubeinrichtung. Auf diese Weise ist gewährleistet, dass in der Wartungsposition keine Teile des Halters oder der Steuereinrichtung in den Bereich hineinragen, in welchem die einzelnen Produkte in Transportrichtung gefördert werden. Mit anderen Worten ist in der Wartungsposition der Betrieb der Fördervorrichtung nicht gestört. Für eine optimale Zugänglichkeit des mindestens einen mit dem bewegbaren Halter verbundenen elektronischen Bauteils ist der kürzeste horizontale Abstand, also der kürzeste Abstand orthogonal zur Schwerkraftrichtung, zwischen Halter und Projektion insbesondere kleiner als 150 mm, bevorzugt kleiner 100 mm, besonders bevorzugt kleiner 50 mm.

Gemäß noch einer Ausgestaltung ist vorgesehen, dass der Halter und/oder das mindestens eine elektronische Bauteil in der Wartungsposition näher am Transportmittel liegt als in der Betriebsposition. Auch dies gewährleistet, dass das mindestens eine elektronische Bauteil in der Wartungsposition besonders einfach von einer Bedienperson, die vor dem Transportmittel steht und über dieses hinweggreifen muss, erreicht werden kann.

Gemäß wieder einer weiteren Ausgestaltung der erfindungsgemäßen Fördervorrichtung ist der Halter translatorisch bewegbar und/oder schwenkbar. Insbesondere ist der Halter in der Wartungsposition um einen Winkel von 75-105°, bevorzugt 80-100°, besonders bevorzugt 85-95°, gegenüber der Betriebsposition verlagert. Vorzugsweise weist der Halter bzw. die Oberfläche des Halters, auf der das mindestens eine elektronische Bauteil angeordnet ist, in der Betriebsposition in die Schwerkraftrichtung und/oder verläuft in der Wartungsposition orthogonal zur Schwerkraftrichtung.

Es sei darauf hingewiesen, dass die Bewegung des Halters nicht allein eine Schwenkbewegung sein muss, sondern zusätzlich oder alternativ auch eine Längs- oder Parallelverschiebung des Halters bei der Verlagerung zwischen der Betriebsposition und der Wartungsposition durchgeführt werden kann. Auch muss bei einer Schwenkbewegung die Schwenkachse nicht zwangsläufig durch den Halter verlaufen, sondern kann von dem Halter auch beabstandet sein. Insbesondere kann es sich um eine fiktive Schwenkachse handeln, die durch eine spezielle Führung bzw. Lagerung des Halters bedingt ist, wie nun im Folgenden erläutert wird.

So kann gemäß einer weiteren Ausgestaltung der erfindungsgemäßen Fördervorrichtung vorgesehen sein, dass das vordere Ende und/oder hintere Ende des Halters zwischen der Betriebsposition und der Wartungsposition entlang einer Bewegungsbahn bewegbar ist, die mindestens einen gebogenen und/oder mindestens einen geraden Abschnitt aufweist, wobei die Bewegungsbahn insbesondere in einer Ebene verläuft, die parallel zur Schwerkraftrichtung und orthogonal zur Transportrichtung verläuft. Mit dem vorderen Ende des Halters ist das in Richtung der Verlagerung von der Betriebsposition zur Wartungsposition weisende Ende gemeint. Das hintere Ende ist entsprechend das Ende des Halters, das in Richtung der Verlagerung von der Wartungsposition zur Betriebsposition weist. Das vordere und/oder hintere Ende kann nun entlang besagter Bewegungsbahnen geführt werden, wobei die Bewegungsbahn des vorderen Endes auch von der des hinteren Endes abweichen kann. Auf diese Weise läßt sich der Halter auch in einem relativ engen Gestell auf einfache Weise in der Betriebsposition platzieren bzw. aus der Betriebsposition in die Wartungsposition herausbewegen. Dies führt zu einer reduzierten Gesamtgröße der Fördervorrichtung.

Gemäß noch einer Ausgestaltung der Fördervorrichtung ist der Halter, insbesondere mit seiner hinteren Hälfte, in mindestens einer Führung, insbesondere einer zumindest überwiegend, vorzugsweise vollständig, gerade verlaufenden Führung, geführt. Die hintere Hälfte ist die Hälfte des Halters, die in Richtung der Verlagerung von der Wartungsposition zur Betriebsposition weist. Bei der Führung kann es sich um eine Führungsschiene, eine Führungsnut oder einen Führungsschlitz handeln. Der Halter weist dazu insbesondere einen mit der Führung zusammenwirkenden Vorsprung auf. Bevorzugt ist der Halter in zwei solcher Führungen geführt, wobei der Halter dann insbesondere für jede Führung einen eigenen Vorsprung aufweist, der mit der jeweiligen Führung zusammenwirkt. Die Führung ist dabei insbesondere unbeweglich mit dem Gestell verbunden.

Erfindungsgemäß weist der Halter mindestens eine Führung auf, insbesondere eine zumindest überwiegend, vorzugsweise vollständig, gerade verlaufende Führung. Auch bei dieser Führung kann es sich um eine Führungsschiene, eine Führungsnut oder einen Führungsschlitz handeln. In der Führung ist ein (damit mechanisch zusammenwirkendes) Führungsgegenstück, ein Stift oder eine Rolle, geführt. Das Führungsgegenstück ist erfindungsgemäß beweglich, insbesondere schwenkbar, mit dem Gestell verbunden. Erfindungsgemäß ist das Führungsgegenstück ein Stift oder eine Rolle, insbesondere kugelgelagerte Rolle, die über einen Hebel mit dem Gestell verbunden ist.

Insbesondere bei Kombination der beiden genannten Führungseinrichtungen erhält man eine Bewegungsbahn für das vordere und/oder hintere Ende des Halters, die es erlaubt, den Halter auf engem Raum zwischen der Betriebsposition und der Wartungsposition zu bewegen.

Gemäß noch einer Ausgestaltung wirkt eine Feder auf das Führungsgegenstück und/oder auf den Hebel und/oder auf den Halter und spannt das Führungsgegenstück oder den Hebel oder den Halter insbesondere in Richtung von der Betriebsposition zur Wartungsposition oder entgegen der Schwerkraftrichtung vor. Auf diese Weise wird die Bewegung, insbesondere das Verschwenken, des Halters aus der Betriebsposition heraus in Richtung der Wartungsposition unterstützt. Zusätzlich oder alternativ kann zur Unterstützung dieser Bewegung auch ein Motor vorgesehen sein.

Gemäß wieder einer weiteren Ausgestaltung der erfindungsgemäßen Fördervorrichtung weist das Gestell mindestens einen Tragarm auf, der das Transportmittel der Vorschubeinrichtung trägt. Dieser Tragarm weist insbesondere vom übrigen Gestell nach vorne. Als "vorne" bzw. "vorderer Teil" der Fördervorrichtung ist also derjenige Teil der Fördervorrichtung definiert, der von dem Transportmittel, also beispielsweise dem Förderband, gebildet wird. "Hinten" bzw. "der hintere Teil" der Vorrichtung ist dann der Teil, in welchem der bewegliche Halter in der Betriebsposition gelagert ist. Bevorzugt sind in Schwerkraftrichtung unterhalb des Transportmittels der Vorschubeinrichtung, mit Ausnahme des mindestens einen Tragarms, keine weiteren Bauteile des Gestells und/oder der Fördervorrichtung angeordnet. Unter dem Transportmittel befindet sich also in diesem Fall ein Freiraum (Luftraum), was Reinigungsarbeiten des Bodens unterhalb des Transportmittels vereinfacht.

Schließlich bildet gemäß noch einer Ausgestaltung der erfindungsgemäßen Fördervorrichtung das Gestell, das heißt die tragenden Bauteile, ein Gehäuse. Wenn die tragenden Bauteile das Gehäuse bilden, ist damit gemeint, dass nicht ein tragendes Gestell mit separaten Verkleidungselementen verkleidet ist, sondern die Gehäusewände selbst die tragenden Elemente bilden. Dabei liegt der Halter und/oder das mindestens eine elektronische Bauteil in der Betriebsposition größtenteils, insbesondere vollständig, innerhalb des Gehäuses und/oder in der Wartungsposition größtenteils, insbesondere vollständig, außerhalb des Gehäuses.

Die Aufgabe wird ferner gelöst durch eine Etikettiervorrichtung mit einer Fördervorrichtung zum Transport von einzelnen Produkten, wie sie zuvor definiert wurde, und mit einer Aufbringvorrichtung zum Aufbringen eines Etiketts auf das jeweilige Produkt.

Es gibt nun eine Vielzahl von Möglichkeiten, die erfindungsgemäße Fördervorrichtung und die erfindungsgemäße Etikettiervorrichtung auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Fig. 1a)-c): eine schematische Darstellung einer Fördervorrichtung mit einem sich bewegenden Halter,
- Fig. 2: eine Seitenansicht eines Ausführungsbeispiels einer Fördervorrichtung und
- Fig. 3: eine Draufsicht auf die Fördervorrichtung gemäß Fig. 2.

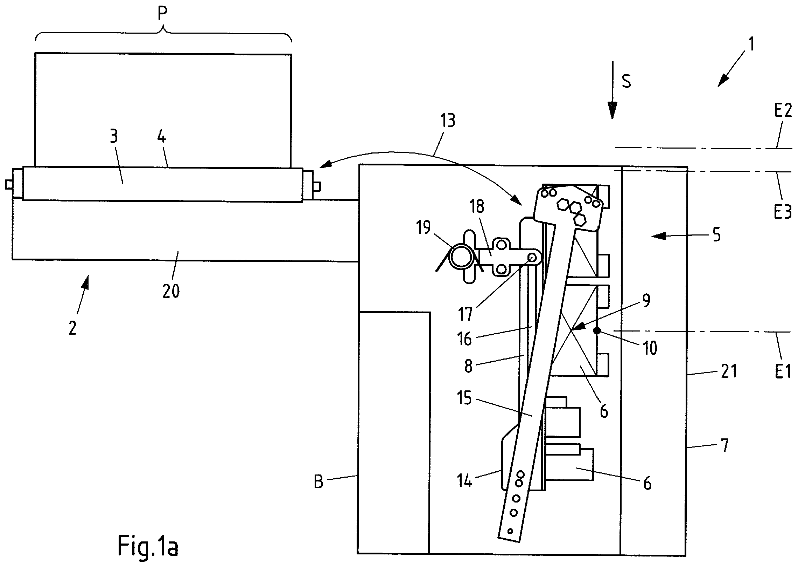

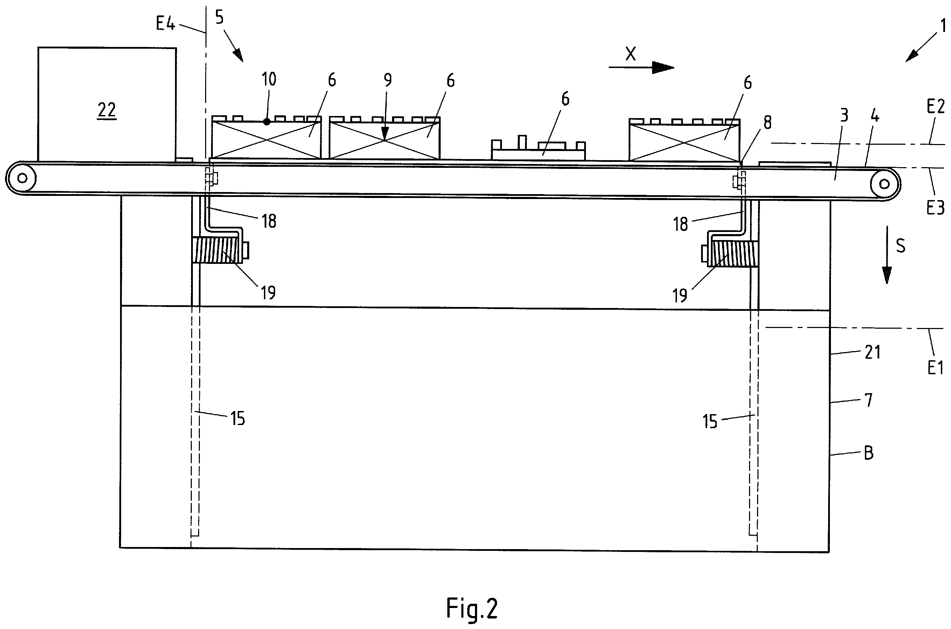

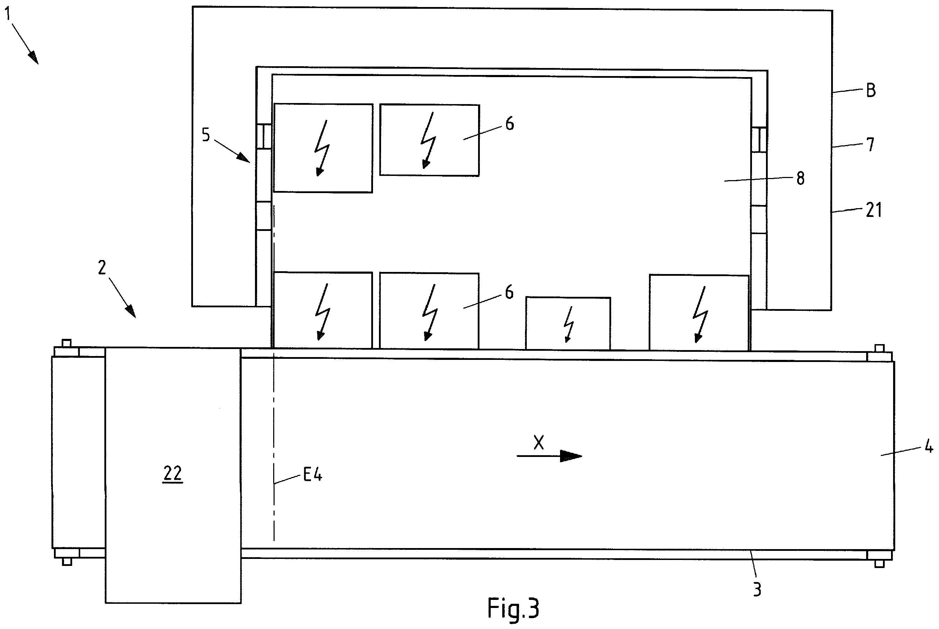

In den Figuren 1a)-c) sowie in den Figuren 2 und 3 ist jeweils eine Fördervorrichtung 1 zum Transport von einzelnen Produkten dargestellt, die Teil einer Etikettiervorrichtung mit einer zusätzlichen Aufbringvorrichtung 22 zum Aufbringen eines Etiketts auf das jeweilige Produkt sein kann.

Die Fördervorrichtung 1 weist eine Vorschubeinrichtung 2, eine Steuereinrichtung 5 und ein Gestell 7 auf. Die Vorschubeinrichtung 2 weist ein Transportmittel 3, hier in Form eines Förderbands, zum Transport des jeweiligen Produkts (nicht dargestellt) in einer Transportrichtung X auf, die zur Schwerkraftrichtung S winklig, hier orthogonal, verläuft. Das Transportmittel 3 weist eine Auflagefläche 4 (die Oberseite des Förderbands) für das jeweilige Produkt auf.

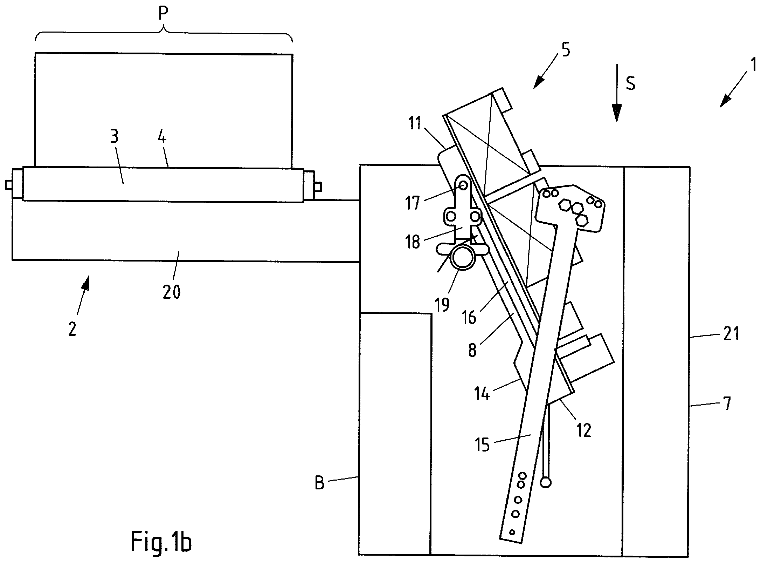

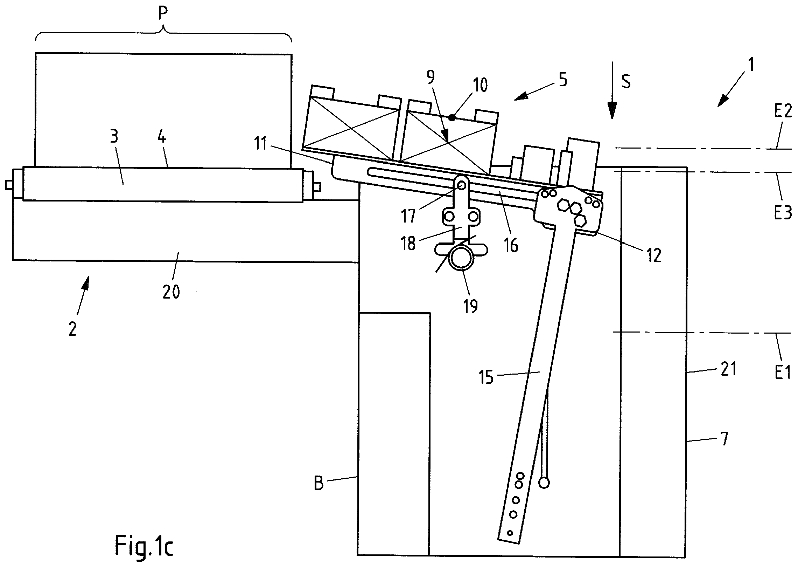

Die Steuereinrichtung 5 weist mehrere elektronische Bauteile 6 auf, die auf einem Halter 8 angeordnet sind. Der Halter 8 ist zwischen einer Betriebsposition und einer Wartungsposition bewegbar und trägt mehrere der elektronischen Bauteile 6 der Steuereinrichtung 5. Wenn im Folgenden von den elektronischen Bauteilen 6 der Steuereinrichtung 5 die Rede ist, sind immer diejenigen Bauteile gemeint, die auf dem Halter 8 angeordnet sind. Der Halter 8 wiederum wird von dem Gestell 7 getragen und ist mit diesem beweglichen verbunden. Die Betriebsposition ist in Fig. 1a) dargestellt. Hier ist der Halter 8 vollständig innerhalb der äußeren Begrenzung B des Gestells und des davon gebildeten Gehäuses 21 angeordnet. Fig. 1b) zeigt eine Zwischenposition zwischen der Betriebsposition und der Wartungsposition. Hier ragt der Halter 8 sowie auch eines der elektronischen Bauteile 6 nach oben (entgegen der Schwerkraftrichtung S) aus der äußeren Begrenzung B des Gestells bzw. aus dem Gehäuse 21 heraus. Fig. 1c) zeigt eine weitere Zwischenposition, die bereits sehr nahe an der Wartungsposition liegt. In dieser Position liegen der Halter 8 und die elektronischen Bauteile 6 größtenteils außerhalb der äußeren Begrenzung B des Gestells 7 bzw. außerhalb des Gehäuses 21. Die endgültige Wartungsposition ist schließlich in den Figuren 2 und 3 dargestellt, wobei hier der Halter 8 und alle oberseitigen elektronischen Bauteile 6 auf der äußeren Begrenzung B des Gestells 7 bzw. aus dem Gehäuse 21 hinausragen.
Wesentlich bei der Fördervorrichtung 1 ist, dass das bzw. die elektronischen Bauteile 6 nicht nur in der Betriebsposition des Halters 8, sondern auch in der Wartungsposition betriebsbereit, das heißt voll funktionsfähig sind.

Der Halter 8 ist in dem Gestell 7 so geführt, dass der Schwerpunkt 9 mindestens eines der elektronischen Bauteile 6 (die mit dem Halter verbunden sind) in der Betriebsposition in einer ersten zur Schwerkraftrichtung S orthogonalen (horizontalen) Ebene E₁ und in der Wartungsposition in einer zweiten zur Schwerkraftrichtung S orthogonalen (horizontalen) Ebene E₂ liegt, die von der ersten Ebene E₁ entgegen der Schwerkraftrichtung S, d.h. vertikal, beabstandet ist. Entsprechendes gilt auch für den Mittelpunkt 10 der vom Halter 8 wegweisenden Oberfläche mindestens eines der elektronischen Bauteile 6, der in der Betriebsposition in derselben ersten horizontalen Ebene E₁ liegt und in der Wartungsposition in einer zweiten davon vertikal beabstandeten Ebene liegt (aus Gründen der Übersichtlichkeit nicht dargestellt). Die mit dem Halter 8 verbundenen elektronischen Bauteile 6 liegen in der Wartungsposition vollständig vertikal oberhalb einer zur Schwerkraftrichtung S orthogonalen Ebene E₃, in der die Auflagefläche 4 des Transportmittels 3 verläuft. Die Wartungsposition ist dabei außerdem so gewählt, dass der Halter 8 und die elektronischen Bauteile 6 außerhalb der entgegen der Schwerkraftrichtung S weisenden vertikalen Projektion P der Auflagefläche 4 des Transportmittels 3 liegen. Dabei beträgt der kürzeste horizontale Abstand zwischen Halter 8 und Projektion P in der Wartungsposition hier beispielhaft 0 mm, das heißt der Halter 8 grenzt an die Projektion P in der Wartungsposition an.

Um ausgehend von der in Fig. 1a) gezeigten Betriebsposition die zuvor beschriebene Wartungsposition zu erreichen, ist der Halter 8 über zwei zur Transportrichtung X parallele Achsen am Gestell 7 angelenkt und geführt. Die Achsen sind definiert durch Elemente, die in entsprechende Führungen 15 und 16 eingreifen, die im Folgenden beschrieben werden.

So ist der Halter 8 mit seiner hinteren Hälfte 14 in einer vollständig gerade verlaufenden Führung 15 in Form einer Führungsschiene geführt. Die Führung 15 ist unbeweglich mit dem Gestell 7 verbunden. Gleichzeitig weist der Halter 8 eine Führung 16 auf, die ebenfalls vollständig gerade verläuft und von einem Führungsschlitz gebildet wird. In dem Führungsschlitz 16 ist eine kugelgelagerte Rolle als Führungsgegenstück 17 geführt. Das Führungsgegenstück 17 bzw. besagte Rolle ist über einen Hebel 18 mit dem Gestell 7 schwenkbar verbunden. Der Hebel 18 ist wiederum mittels einer Feder 19 in Richtung von der Betriebsposition zur Wartungsposition vorgespannt.

Die zuvor beschriebene Lagerung des Halters 8 über die beiden Führungseinrichtungen ermöglicht es, den Halter auf ganz bestimmte Weise translatorisch und schwenkbar zu bewegen, derart, dass der Halter 8 in der Wartungsposition im vorliegenden Ausführungsbeispiel um einen Winkel von 90° gegenüber der Betriebsposition verlagert ist. Durch die zuvor beschriebene besondere Lagerung des Halters 8 wird erreicht, dass das vordere Ende 11 und/oder hintere Ende 12 des Halters 8 zwischen der Betriebsposition und der Wartungsposition entlang einer Bewegungsbahn 13 bewegbar ist, die mindestens einen gebogenen und/oder mindestens einen geraden Abschnitt aufweist, wobei die Bewegungsbahn 13 insbesondere in einer Ebene E₄ verläuft, die parallel zur Schwerkraftrichtung S und orthogonal zur Transportrichtung X verläuft. Dabei ist die Bewegungsbahn 13 des vorderen Endes 11 und die Bewegungsbahn 13 des hinteren Endes 12 so gewählt, dass in der Wartungsposition der Halter 8 mit den elektronischen Bauteilen 6 näher am Transportmittel 3 liegt als in der Betriebsposition.

Wie insbesondere die Figuren 1a) bis c) erkennen lassen, weist das Gestell 7 mindestens einen Tragarm 20, genau genommen zwei Tragarme 20, auf, die von dem übrigen Gestell nach vorne verlaufen. Auf den Tragarmen 20 ist das Transportmittel 3 gelagert. Unterhalb des Transportmittels 3 befinden sich mit Ausnahme der Tragarme 20 keine weiteren Bauteile, weder des Gestells 7, noch der übrigen Fördervorrichtung 1. Vielmehr ist hier ein freier Luftraum vorgesehen.

### Bezugszeichenliste

- 1: Fördervorrichtung
- 2: Vorschubeinrichtung
- 3: Transportmittel
- 4: Auflagefläche
- 5: Steuereinrichtung
- 6: elektronisches Bauteil
- 7: Gestell
- 8: Halter
- 9: Schwerpunkt des elektronischen Bauteils
- 10: Mittelpunkt der vom Halter wegweisenden Bauteiloberfläche
- 11: vorderes Ende des Halters
- 12: hinteres Ende des Halters
- 13: Bewegungsbahn des vorderen und/oder hinteren Endes
- 14: hintere Hälfte des Halters
- 15: Führung
- 16: Führung
- 17: Führungsgegenstück
- 18: Hebel
- 19: Feder
- 20: Tragarm
- 21: Gehäuse
- 22: Aufbringvorrichtung
- X: Transportrichtung
- S: Schwerkraftrichtung
- B: äußere Begrenzung des Gestells
- P: vertikale Projektion der Auflagefläche
- E₁-E₄: Ebenen

## Patentansprüche

1. Fördervorrichtung (1) zum Transport von einzelnen Produkten
- mit einer Vorschubeinrichtung (2) umfassend ein Transportmittel (3) zum Transport des jeweiligen Produkts in einer Transportrichtung (X), die zur Schwerkraftrichtung (S) winkelig, insbesondere orthogonal, verläuft, wobei das Transportmittel (3) eine Auflagefläche (4) für das jeweilige Produkt aufweist,
- mit einer Steuereinrichtung (5) umfassend mindestens ein elektronisches Bauteil (6) und
- mit einem Gestell (7), das einen zwischen einer Betriebsposition, in der das mindestens eine elektronische Bauteil (6) in einer geschützten Position angeordnet ist, in der es nicht unabsichtlich berührt und beschädigt werden kann, und einer Wartungsposition, in der das mindestens eine elektronische Bauteil (6) in einer weniger geschützten Position angeordnet ist, in der es für Einstell- und Wartungsarbeiten zugänglich ist, bewegbaren Halter (8) trägt, der das mindestens eine elektronische Bauteil (6) trägt,
wobei das mindestens eine elektronische Bauteil (6) in der Betriebsposition des Halters (8) betriebsbereit ist,
wobei der Halter (8) so angeordnet und gelagert ist, dass das mindestens eine elektronische Bauteil (6) auch in der Wartungsposition betriebsbereit ist, so dass das mindestens eine elektronische Bauteil (6) oder die Steuereinrichtung (5) alle für die Steuerung vorgesehenen Funktionen ausführen kann,
**dadurch gekennzeichnet, dass** der Halter (8) mindestens eine Führung (16) aufweist, in der ein Führungsgegenstück (17) geführt ist, wobei das Führungsgegenstück (17) mit dem Gestell (7) beweglich verbunden ist, und wobei das Führungsgegenstück (17) ein Stift oder eine Rolle ist, die über einen Hebel (18) mit dem Gestell (7) verbunden ist.

2. Fördervorrichtung (1) nach Anspruch 1, **dadurch gekennzeichnet, dass** der Schwerpunkt (9) und/oder der Mittelpunkt (10) der vom Halter (8) wegweisenden Oberfläche des mindestens einen elektronischen Bauteils (6) in der Betriebsposition jeweils in einer ersten zur Schwerkraftrichtung (S) orthogonalen Ebene (E₁) und in der Wartungsposition jeweils in einer zweiten zur Schwerkraftrichtung (S) orthogonalen Ebene (E₂) liegt, die von der jeweils ersten Ebene (E₁) entgegen der Schwerkraftrichtung (S) beabstandet ist.

3. Fördervorrichtung (1) nach Anspruch 1 oder 2, **dadurch gekennzeichnet, dass** der Halter (8) und/oder das mindestens eine elektronische Bauteil (6) in der Betriebsposition größtenteils, insbesondere vollständig, innerhalb der äußeren Begrenzung (B) des Gestells (7) und/oder in der Wartungsposition größtenteils, insbesondere vollständig, außerhalb der äußeren Begrenzung (B) des Gestells (7) liegt.

4. Fördervorrichtung (1) nach einem der vorangehenden Ansprüche, **dadurch gekennzeichnet, dass** das mindestens eine elektronische Bauteil (6) in der Wartungsposition größtenteils, insbesondere vollständig, vertikal oberhalb einer zur Schwerkraftrichtung (S) orthogonalen Ebene (E₃) liegt, in der die Auflagefläche (4) des Transportmittels (3) der Vorschubeinrichtung (2) verläuft.

5. Fördervorrichtung (1) nach einem der vorangehenden Ansprüche, **dadurch gekennzeichnet, dass** der Halter (8) und/oder das mindestens eine elektronische Bauteil (6) in der Wartungsposition außerhalb der entgegen der Schwerkraftrichtung (S) weisenden Projektion (P) der Auflagefläche (4) des Transportmittels (3) der Vorschubeinrichtung (2) liegt, wobei der kürzeste horizontale Abstand zwischen Halter (8) und Projektion (P) insbesondere kleiner als 150 mm, bevorzugt kleiner 100 mm, besonders bevorzugt kleiner 50 mm, ist.

6. Fördervorrichtung (1) nach einem der vorangehenden Ansprüche, **dadurch gekennzeichnet, dass** der Halter (8) und/oder das elektronische Bauteil (6) in der Wartungsposition näher am Transportmittel (3) liegt als in der Betriebsposition.

7. Fördervorrichtung (1) nach einem der vorangehenden Ansprüche, **dadurch gekennzeichnet, dass** der Halter (8) translatorisch bewegbar und/oder schwenkbar ist und insbesondere in der Wartungsposition um einen Winkel von 75-105°, bevorzugt 80-100°, besonders bevorzugt 85-95°, gegenüber der Betriebsposition verlagert ist.

8. Fördervorrichtung (1) nach einem der vorangehenden Ansprüche, **dadurch gekennzeichnet, dass** das vordere Ende (11) und/oder hintere Ende (12) des Halters (8) zwischen der Betriebsposition und der Wartungsposition entlang einer Bewegungsbahn (13) bewegbar ist, die mindestens einen gebogenen und/oder mindestens einen geraden Abschnitt aufweist, wobei die Bewegungsbahn (13) insbesondere in einer Ebene (E₄) verläuft, die parallel zur Schwerkraftrichtung (S) und orthogonal zur Transportrichtung (X) verläuft.

9. Fördervorrichtung (1) nach einem der vorangehenden Ansprüche, **dadurch gekennzeichnet, dass** der Halter (8), insbesondere mit seiner hinteren Hälfte (14), in mindestens einer Führung (15), insbesondere einer zumindest überwiegend gerade verlaufenden Führung (15), geführt ist.

10. Fördervorrichtung (1) nach Anspruch 9, **dadurch gekennzeichnet, dass** die Führung (15) unbeweglich mit dem Gestell (7) verbunden ist.

11. Fördervorrichtung (1) nach einem der vorangehenden Ansprüche, **dadurch gekennzeichnet, dass** die Führung (16) eine zumindest überwiegend gerade verlaufende Führung (16) ist.

12. Fördervorrichtung (1) nach Anspruch 11, **dadurch gekennzeichnet, dass** das Führungsgegenstück (17) mit dem Gestell (7) schwenkbar verbunden ist.

13. Fördervorrichtung (1) nach einem der vorangehenden Ansprüche, **dadurch gekennzeichnet, dass** eine Feder (19) auf das Führungsgegenstück (17) und/oder den Hebel (18) und/oder den Halter (8) wirkt und das Führungsgegenstück (17) oder den Hebel (18) oder den Halter (8) insbesondere in Richtung von der Betriebsposition zur Wartungsposition oder entgegen der Schwerkraftrichtung (S) vorspannt.

14. Fördervorrichtung (1) nach einem der vorangehenden Ansprüche, **dadurch gekennzeichnet, dass** das Gestell (7) mindestens einen Tragarm (20) aufweist, der das Transportmittel (3) der Vorschubeinrichtung (2) trägt.

15. Fördervorrichtung (1) nach Anspruch 14, **dadurch gekennzeichnet, dass** in Schwerkraftrichtung (S) unterhalb des Transportmittels (3) der Vorschubeinrichtung (2), mit Ausnahme des mindestens einen Tragarms (20), keine weiteren Bauteile des Gestells (7) und/oder der Fördervorrichtung (1) angeordnet sind.

16. Fördervorrichtung (1) nach einem der vorangehenden Ansprüche, **dadurch gekennzeichnet, dass** das Gestell (7) ein Gehäuse (21) bildet und der Halter (8) und/oder das mindestens eine elektronische Bauteil (6) in der Betriebsposition größtenteils, insbesondere vollständig, innerhalb des Gehäuses (21) und/oder in der Wartungsposition größtenteils, insbesondere vollständig, außerhalb des Gehäuses (21) liegt.

17. Etikettiervorrichtung
- mit einer Fördervorrichtung (1) zum Transport von einzelnen Produkten nach einem der vorangehenden Ansprüche und
- mit einer Aufbringvorrichtung (22) zum Aufbringen von Etiketten auf das jeweilige Produkt.

## Claims

1. Conveying apparatus (1) for transporting individual products,
- having a feed device (2) comprising a transport means (3) for transporting the respective product in a direction of transport (X) which runs at an angle, in particular orthogonally, to the direction of gravity (S), wherein the transport means (3) has a resting surface (4) for the respective product,
- having a control device (5) comprising at least one electronic component (6), and
- having a frame (7) bearing a holder (8) which is movable between an operating position, in which the at least one electronic component (6) is arranged in a protected position in which it cannot be inadvertently touched and damaged, and a maintenance position, in which the at least one electronic component (6) is arranged in a less protected position in which it is accessible for adjustment and maintenance works, and which bears at least one electronic component (6),
in which the at least one electronic component (6), in the operating position of the holder (8), is ready for operation,
wherein the holder (8) is arranged and mounted such that the at least one electronic component (6) is ready for operation also in the maintenance position, such that the at least one electronic component (6) or the control device (5) can execute all functions which are provided for the control system,
**characterized in that** the holder (8) has at least one guide (16) in which a guide counterpart (17) is guided, wherein the guide counterpart (17) is movably connected to the frame (7), and wherein the guide counterpart (17) is a pin or a roller, which is connected to the frame (7) via a lever (18) .

2. Conveying apparatus (1) according to Claim 1,
**characterized in that** the center of gravity (9) and/or the midpoint (10) of that surface of the at least one electronic component (6) which is facing away from the holder (8) lies, in the operating position, respectively in a first plane (E₁) orthogonal to the direction of gravity (S) and, in the maintenance position, respectively in a second plane (E₂) orthogonal to the direction of gravity (S), which second plane is distanced from the respectively first plane (E₁) counter to the direction of gravity (S).

3. Conveying apparatus (1) according to Claim 1 or 2,
**characterized in that** the holder (8) and/or the at least one electronic component (6) lies, in the operating position, mostly, in particular fully, within the outer boundary (B) of the frame (7) and/or, in the maintenance position, mostly, in particular fully, outside the outer boundary (B) of the frame (7).

4. Conveying apparatus (1) according to one of the preceding claims, **characterized in that** the at least one electronic component (6) lies, in the maintenance position, mostly, in particular fully, vertically above a plane (E₃) which is orthogonal to the direction of gravity (S) and in which runs the resting surface (4) of the transport means (3) of the feed device (2).

5. Conveying apparatus (1) according to one of the preceding claims, **characterized in that** the holder (8) and/or the at least one electronic component (6) lies, in the maintenance position, outside that projection (P) of the resting surface (4) of the transport means (3) of the feed device (2) which faces counter to the direction of gravity (S), the shortest horizontal distance between holder (8) and projection (P) being in particular less than 150 mm, preferredly less than 100 mm, particularly preferredly less than 50 mm.

6. Conveying apparatus (1) according to one of the preceding claims, **characterized in that** the holder (8) and/or the electronic component (6), in the maintenance position, lies closer to the transport means (3) than in the operating position.

7. Conveying apparatus (1) according to one of the preceding claims, **characterized in that** the holder (8) is translationally movable and/or pivotable and, in particular, in the maintenance position, is shifted by an angle of 75-105°, preferredly 80-100°, particularly preferredly 85-95°, in relation to the operating position.

8. Conveying apparatus (1) according to one of the preceding claims, **characterized in that** the front end (11) and/or rear end (12) of the holder (8) is movable between the operating position and the maintenance position along a motional path (13) which has at least one curved and/or at least one straight portion, wherein the motional path (13) runs in particular in a plane (E₄) which runs parallel to the direction of gravity (S) and orthogonally to the direction of transport (X).

9. Conveying apparatus (1) according to one of the preceding claims, **characterized in that** the holder (8) is guided, in particular with its rear half (14), in at least one guide (15), in particular an at least predominantly straight-running guide (15) .

10. Conveying apparatus (1) according to Claim 9, **characterized in that** the guide (15) is connected immovably to the frame (7).

11. Conveying apparatus (1) according to one of the preceding claims, **characterized in that** the guide (16) is an at least predominantly straight-running guide (16).

12. Conveying apparatus (1) according to Claim 11, **characterized in that** the guide counterpart (17) is connected pivotably to the frame (7).

13. Conveying apparatus (1) according to one of the preceding claims, **characterized in that** a spring (19) acts on the guide counterpart (17) and/or the lever (18) and/or the holder (8) and pretensions the guide counterpart (17) or lever (18) or holder (8) in particular in the direction from the operating position to the maintenance position or counter to the direction of gravity (S).

14. Conveying apparatus (1) according to one of the preceding claims, **characterized in that** the frame (7) has at least one support arm (20), which bears the transport means (3) of the feed device (2).

15. Conveying apparatus (1) according to Claim 14,
**characterized in that** in the direction of gravity (S) beneath the transport means (3) of the feed device (2), with the exception of the at least one support arm (20), no further components of the frame (7) and/or of the conveying apparatus (1) are arranged.

16. Conveying apparatus (1) according to one of the preceding claims, **characterized in that** the frame (7) forms a housing (21), and the holder (8) and/or the at least one electronic component (6) lies, in the operating position, mostly, in particular fully, within the housing (21) and/or, in the maintenance position, mostly, in particular fully, outside the housing (21).

17. Labeling apparatus
- having a conveying apparatus (1) for transporting individual products, according to one of the preceding claims, and
- having an applicator (22) for applying labels to the respective product.

## Revendications

1. Dispositif de transport (1) destiné à transporter des produits individuels, le dispositif de transport comprenant :
- une unité d'avancement (2) comprenant un moyen de transport (3) destiné à transporter le produit respectif dans un sens de transport (X) qui s'étend obliquement, en particulier orthogonalement, au sens (S) de la gravité, le moyen de transport (3) comportant une surface d'appui (4) destinée au produit respectif,
- une unité de commande (5) comprenant au moins un composant électronique (6) et
- un cadre (7) qui porte un support (8) supportant l'au moins un composant électronique (6) et déplaçable disposé entre une position de fonctionnement, dans laquelle l'au moins un composant électronique (6) est disposé dans une position protégée dans laquelle il ne peut pas être endommagé ou contacté accidentellement, et une position de maintenance dans laquelle l'au moins un composant électronique (6) est disposé dans une position moins protégée dans laquelle il est accessible en vue de travaux de réglage et de maintenance,
l'au moins un composant électronique (6) étant prêt à fonctionner dans la position de fonctionnement du support (8),
le support (8) étant disposé et monté de sorte que l'au moins un composant électronique (6) soit également prêt à fonctionner dans la position de maintenance de sorte que l'au moins un composant électronique (6) ou l'unité de commande (5) puisse effectuer toutes les fonctions prévues pour la commande,
**caractérisé en ce que** le support (8) comporte au moins un guide (16) dans lequel une pièce de guidage homologue (17) est guidée, la pièce de guidage homologue (17) étant reliée de manière mobile au cadre (7) et la pièce de guidage homologue (17) étant une tige ou un rouleau qui est relié(e) au cadre (7) par le biais d'un levier (18).

2. Dispositif de transport (1) selon la revendication 1, **caractérisé en ce que** le centre de gravité (9) et/ou le centre (10) de la surface, tournée à l'opposé du support (8), de l'au moins un composant électronique (6) se trouvent chacun, dans la position de fonctionnement, dans un premier plan (E₁) orthogonal au sens (S) de la gravité et, dans la position de maintenance, dans un deuxième plan (E₂) orthogonal au sens (S) de la gravité et espacé du premier plan respectif (E₁) dans le sens opposé au sens (S) de la gravité.

3. Dispositif de transport (1) selon la revendication 1 ou 2, **caractérisé en ce que** le support (8) et/ou l'au moins un composant électronique (6) se trouvent dans la position de fonctionnement en grande partie, en particulier complètement, dans la limite extérieure (B) du cadre (7) et/ou dans la position de maintenance en grande partie, en particulier complètement, en dehors de la limite extérieure (B) du cadre (7).

4. Dispositif de transport (1) selon l'une des revendications précédentes, **caractérisé en ce que** l'au moins un composant électronique (6) se trouve, dans la position de maintenance, en grande partie, en particulier complètement, verticalement au-dessus d'un plan (E₃) qui est orthogonal au sens (S) de la gravité et dans lequel s'étend la surface d'appui (4) du moyen de transport (3) de l'unité d'avancement (2).

5. Dispositif de transport (1) selon l'une des revendications précédentes, **caractérisé en ce que** le support (8) et/ou l'au moins un composant électronique (6) se trouvent, dans la position de maintenance, en dehors de la projection (P), dirigée dans le sens opposée au sens (S) de la gravité, de la surface d'appui (4) du moyen de transport (3) de l'unité d'avancement (2), la distance horizontale la plus courte entre le support (8) et la projection (P) étant notamment inférieure à 150 mm, de préférence inférieure à 100 mm, de manière particulièrement préférée inférieure à 50 mm.

6. Dispositif de transport (1) selon l'une des revendications précédentes, **caractérisé en ce que** le support (8) et/ou le composant électronique (6) se trouvent plus près du moyen de transport (3) dans la position de maintenance que dans la position de fonctionnement.

7. Dispositif de transport (1) selon l'une des revendications précédentes, **caractérisé en ce que** le support (8) est mobile en translation et/ou pivotant et est déplacé, en particulier dans la position de maintenance, d'un angle de 75 à 105°, de préférence de 80 à 100°, de manière particulièrement préférée de 85 à 95°, par rapport à la position de fonctionnement.

8. Dispositif de transport (1) selon l'une des revendications précédentes, **caractérisé en ce que** l'extrémité avant (11) et/ou l'extrémité arrière (12) du support (8) sont déplaçables entre la position de fonctionnement et la position de maintenance le long d'une trajectoire (13) qui comporte au moins une partie courbe et/ou au moins une partie droite, la trajectoire (13) s'étendant en particulier dans un plan (E₄) qui est parallèle au sens (S) de la gravité et orthogonal au sens de transport (X).

9. Dispositif de transport (1) selon l'une des revendications précédentes, **caractérisé en ce que** le support (8) est guidé, en particulier avec sa moitié arrière (14), dans au moins un guide (15), en particulier un guide (15) qui s'étend au moins en grande partie de manière rectiligne.

10. Dispositif de transport (1) selon la revendication 9, **caractérisé en ce que** le guide (15) est relié de manière immobile au cadre (7).

11. Dispositif de transport (1) selon l'une des revendications précédentes, **caractérisé en ce que** le guide (16) est un guide (16) qui s'étend au moins en grande partie de manière rectiligne.

12. Dispositif de transport (1) selon la revendication 11, **caractérisé en ce que** la pièce de guidage homologue (17) est reliée de manière pivotante au cadre (7).

13. Dispositif de transport (1) selon l'une des revendications précédentes, **caractérisé en ce qu'**un ressort (19) agit sur la pièce de guidage homologue (17) et/ou sur le levier (18) et/ou sur le support (8) et précontraint la pièce de guidage homologue (17) ou le levier (18) ou le support (8) notamment dans le sens allant de la position de fonctionnement à la position de maintenance ou dans le sens opposé au sens (S) de la gravité.

14. Dispositif de transport (1) selon l'une des revendications précédentes, **caractérisé en ce que** le cadre (7) comporte au moins un bras de support (20) qui porte le moyen de transport (3) de l'unité d'avancement (2) .

15. Dispositif de transport (1) selon la revendication 14, **caractérisé en ce qu'**aucun autre composant du cadre (7) et/ou du dispositif de transport (1) n'est disposé au-dessous du moyen de transport (3) de l'unité d'avancement (2) dans le sens (S) de la gravité, à l'exception de l'au moins un bras de support (20).

16. Dispositif de transport (1) selon l'une des revendications précédentes, **caractérisé en ce que** le cadre (7) forme un boîtier (21) et le support (8) et/ou l'au moins un composant électronique (6) se trouvent, dans la position de fonctionnement, en grande partie, en particulier complètement, à l'intérieur du boîtier (21) et/ou, dans la position de maintenance, en grande partie, en particulier complètement, à l'extérieur du boîtier (21).

17. Dispositif d'étiquetage comprenant :
- un dispositif de transport (1) destiné à transporter des produits individuels selon l'une des revendications précédentes et
- un dispositif d'application (22) destiné à appliquer des étiquettes sur le produit respectif.
